Europäisches Patentamt

European Patent Office

Office européen des brevets

(11) Numéro de publication: **0 042 775**
**B1**

# (12) FASCICULE DE BREVET EUROPEEN

(45) Date de publication du fascicule du brevet: **12.09.84**

(21) Numéro de dépôt: **81400891.8**

(22) Date de dépôt: **04.06.81**

(51) Int. Cl.³: **G 01 F 23/06**

(54) **Détecteur de niveau de liquide, en particulier pour déterminer le niveau de carburant dans un réservoir de véhicule.**

(30) Priorité: **19.06.80 FR 8013586**

(43) Date de publication de la demande:
**30.12.81 Bulletin 81/52**

(45) Mention de la délivrance du brevet:
**12.09.84 Bulletin 84/37**

(84) Etats contractants désignés:
**DE GB IT**

(56) Documents cités:
**BE-A- 737 641**
**FR-A-1 552 351**
**FR-A-2 414 191**
**GB-A- 952 529**
**US-A-2 714 641**

(73) Titulaire: **e.d. VEGLIA**
**125, rue de Montreuil**
**F-75540 Paris Cedex 11 (FR)**

(72) Inventeur: **Coulange, Jean**
**20, rue des Alouettes**
**F-78700 Conflans Ste Honorine (FR)**

(74) Mandataire: **Bloch, Robert et al**
**39 avenue de Friedland**
**F-75008 Paris (FR)**

Courier Press, Leamington Spa, England.

## Description

L'invention concerne un détecteur de niveau de liquide du type décrit dans le préambule de la revendication 1 et destiné notamment à la détermination du niveau de carburant dans un réservoir de véhicule. Ce détecteur assure en outre une alerte lorsque le niveau atteint une valeur déterminée.

Il apparaît souhaitable d'attirer l'attention du conducteur, par exemple au moyen d'un voyant lumineux, lorsque le niveau de carburant atteint une valeur minimale déterminée correspondant à un rayon d'action donné pour le véhicule. La seule indication du niveau, par exemple au moyen d'une aiguille ou autre élément d'affichage, peut en effet être considérée comme insuffisante à cet égard.

La demande de brevet français n° 2 414 191 décrit un détecteur de niveau de liquide du type comprenant une tige fixe portant un enroulement sur toute sa hauteur, un flotteur annulaire monté autour de la tige et portant au moins une lame conductrice constamment en contact avec ledit enroulement, des moyens d'alerte comprenant une tige conductrice coulissant dans un alésage pratiqué dans le flotteur, ledit alésage ayant son axe sensiblement parallèle à l'axe de la tige fixe, la tige conductrice comportant un moyen de retenue, et une surface conductrice comportant un moyen de retenue, et une surface conductrice fixée à l'extrémité inférieure de la tige fixe, l'agencement étant tel que la tige conductrice dépasse du flotteur vers le bas lorsque le niveau est supérieur à un niveau d'alerte déterminé et entre en contact avec la surface conductrice lorsque ce niveau est atteint, et des connexions électriques reliant l'enroulement, la surface conductrice, la ou les lames conductrices et la tige conductrice à des bornes de sortie.

Dans ce dispositif connu, la position du flotteur commande la résistance de la partie de l'enroulement comprise entre les lames 7, et une extrémité dudit enroulement, ce qui permet de déterminer le niveau de liquide. Par ailleurs, les moyens d'alerte sont conçus pour ne pas interférer avec les moyens de détection du niveau, en ce sens que le contact entre la tige conductrice et la surface conductrice, qui s'est établi à partir du niveau d'alerte, n'empêche pas le flotteur de continuer à descendre lorsque le niveau baisse au delà du niveau d'alerte.

Dans la réalisation divulguée par la demande de brevet précitée, la tige conductrice porte à son extrémité supérieure un téton formant moyen de retenue et l'alésage recevant la tige conductrice comporte une portion élargie dans laquelle est logé un élément hélicoïdal conducteur reliant l'extrémité inférieure de la tige conductrice à un contact placé sur le fond de ladite, portion élargie, lequel contact est relié à la même connexion que les lames conductrices du flotteur.

Une telle réalisation est passablement compliquée. Le montage de l'élément hélicoïdal conducteur est en particulier une opération très délicate.

La présente invention vise à réaliser les moyens d'alerte d'une façon beaucoup plus simple et commode.

Selon l'invention, le détecteur de niveau est caractérisé par le fait que la tige conductrice se prolonge à son extrémité supérieure par une boucle souple en fil conducteur située dans un plan sensiblement perpendiculaire à l'axe du flotteur et dont l'extrémité opposée à la tige conductrice est fixée sur ladite pièce conductrice.

La boucle de fil conducteur remplit ainsi simultanément les fonctions de liaison électrique et de retenue de la tige conductrice tout en autorisant, grâce à sa souplesse, un déplacement relatif entre le flotteur et la tige conductrice lorsque le niveau descend au-delà du niveau d'alerte. La déformation qui en résulte pour la boucle est élastique, de sorte que la boucle exerce de façon avantageuse une force de rappel qui s'oppose au déplacement de la tige conductrice par rapport au flotteur.

L'élément unique en fil métallique qui constitue la tige conductrice et la boucle représente évidemment une structure beaucoup plus simple et économique que les moyens prévus dans le demande de brevet précitée.

Le montage consiste simplement à engager la portion qui constitue la tige conductrice dans l'alésage pratiqué dans le flotteur et à souder l'extrémité de la boucle opposée à la tige à la languette conductrice portant les lames de contact.

La description ci-après d'un exemple de réalisation représenté sur les dessins annexés permettra de mieux comprendre l'invention.

Dans les dessins:

— la figure 1 montre un détecteur de niveau selon l'invention dans une position correspondant à un niveau supérieur au niveau d'alerte;

— la figure 2 correspond au cas où le niveau est inférieur au niveau d'alerte, certaines parties étant vues en section;

— la figure 3 montre le flotteur des figs. 1 et 2 en vue de dessus.

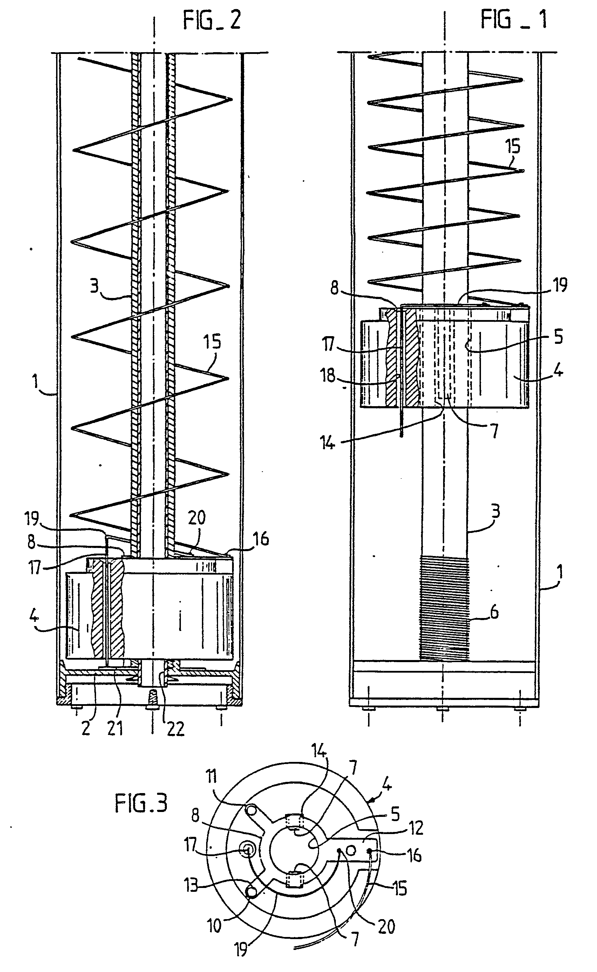

Le détecteur de niveau pour réservoir de carburant de vehicule, représente par les figures 1 à 3 comprend un tube extérieur 1 muni d'un fond 2 et d'un couvercle, non représenté ici une tige de guidage 3 placée suivant l'axe du tube 1 et fixée au fond et au couvercle du tube, et un flotteur 4 placé à l'intérieur du tube et muni d'une ouverture centrale 5 à travers laquelle passe la tige de guidage 3.

Le tube 1 comporte un trou, non représenté, situé un peu au-dessus du niveau du fond 2, qui permet au carburant de pénétrer à l'intérieur du tube. Mais ce trou est suffisamment petit pour que le tube remplisse efficacement le rôle de dispositif "anti-vagues."

La tige de guidage 3 porte sur toute la hauteur de sa surface extérieure un enroulement 6 en fil conducteur, représenté seulement en partie sur la fig. 1. Cet enroulement 6 est en contact glissant avec deux lames conductrices 7 portées par le flotteur, qui dépassent intérieurement par rapport à l'ouverture centrale 5.

Les lames 7, comme le montre mieux la fig. 3, constituent les prolongements d'une pièce conductrice 8 en forme générale de couronne placée sur le dessus du flotteur, qui se prolonge par trois languettes radiales 10, 11, 12 fixées au flotteur par des rivets 13. Les lames 7 sont reçues dans des encoches 14 formées dans la paroi intérieure du flotteur.

La pièce conductrice 8 est reliée à une borne de sortie, fixée sur le couvercle du tube et non représentée ici, par un élément hélicoïdal souple 15 en fil métallique, dont l'extrémité 16 est soudée sur la languette 12.

L'enroulement 6 est également relié par son extrémité supérieure à une borne de sortie. Le flotteur 4 joue ainsi le rôle d'un curseur de potentiomètre et sa position, définie par le niveau du carburant, commande la résistance de la partie de l'enroulement comprise entre les lames 7 et une extrémité dudit enroulement. La mesure de cette résistance permet donc de déterminer la niveau de carburant, et des moyens appropriés, qu'il n'est pas nécessaire de décrire ici, sont prévus pour l'affichage de cette donnée sur le tableau de bord du véhicule.

Il est prévu en outre un dispositif d'alerte qui déclenche l'allumage d'un voyant lumineux sur le tableau de bord du véhicule lorsque le niveau de carburant tombe à un niveau d'alerte déterminé. Ce dispositif comprend une tige 17 en fil conducteur, coulissant librement dans un alésage 18 formé dans le flotteur 4 parallèlement à son axe. La tige 17 se prolonge à son extrémité supérieure par une boucle 19 formant un coude par rapport à la tige 17 et dont l'extrémité 20 est soudée sur la languette 12, comme le montre la figure 3. Le fil constituant la boucle 19 et la tige 17 est fin, de sorte que la boucle présente une grande souplesse autorisant le déplacement vertical de la tige 17. D'autre part, la tige conductrice 17 est plus longue que l'alésage 18 et dépasse donc du flotteur vers le bas dans le cas, illustré par la figure 1, où le niveau de carburant est supérieur au niveau d'alerte.

Le dispositif d'alerte comprend également une surface conductrice 21 en forme de couronne, placé sur le fond 2 du tube extérieur. Le diamètre extérieur de la surface conductrice 21 est tel que l'extrémité inférieure de la tige conductrice 17 entre en contact avec lui lorsque le flotteur est dans une position suffisamment basse, comme illustré par la figure 2. La surface conductrice 21 entoure et est en contact avec un tube 22 en métal conducteur qui constitue la partie intérieure de la tige de guidage 3, celle-ci étant réalisée de façon appropriée par extrusion d'une matière plastique autour du tube métallique 22. Le tube 22 sert de conducteur électrique dans le circuit d'alerte et est relié par son extrémité supérieure à une borne de sortie fixée sur le couvercle du tube 1 et non représentée ici.

Lorsque le niveau de carburant tombe jusqu'au point où la tige conductrice 17 entre en contact avec la surface conductrice 21, le circuit d'alerte se ferme et le voyant lumineux s'allume. Compte tenu du fait que la tige conductrice 17 coulisse librement par rapport au flotteur, celui-ci peut continuer à descendre si le niveau de carburant baisse encore, de sorte que le dispositif d'alerte n'interfère en rien avec l'indication du niveau. Ceci est illustré par la fig. 2, qui montre le flotteur dans sa position la plus basse. On voit que les positions relatives de la tige 17 et du flotteur ont changé par rapport au cas de la fig. 1, la variation étant absorbée par la souplesse de la boucle 19.

On notera que la déformation correspondante de la boucle 19 est une déformation élastique et que la boucle exerce sur la tige conductrice 17 une force de rappel qui tend à maintenir dans la position la plus basse par rapport au flotteur. Cette fonction de rappel est importante car la tige 17, formée d'un fil fin, présente un poids propre faible. Faute de cette action de rappel, la tige 17 pourrait ne pas revenir dans sa position de repos de la fig. 1 lors de la remontée du flotteur après une alerte.

## Revendications

1. Détecteur de niveau de liquide du type comprenant une tige fixe (3) portant un enroulement (6) sur toute sa hauteur, un flotteur annulaire (4) monté autour de la tige (3) et portant au moins une lame conductrice (7) constamment en contact avec ledit enroulement (6) et reliée à une pièce conductrice (8), ellemême fixée sur le flotteur (4), des moyens d'alerte comprenant une tige conductrice (17) coulissant dans un alésage (18) pratiqué dans le flotteur (4), ledit alésage (18) ayant son axe sensiblement parallèle à l'axe de la tige fixe (3), la tige conductrice (17) comportant un moyen de retenue, et une surface conductrice (21) fixée à l'extrémité inférieure de la tige fixe (3), l'agencement étant tel que la tige conductrice (17) dépasse du flotteur (4) vers le bas lorsque le niveau est supérieur à un niveau d'alerte déterminé et entre en contact avec la surface conductrice (21) lorsque ce niveau est atteint, et des connexions électriques (22) reliant l'enroulement (6), la surface conductrice (21), la ou les lames conductrices (7) et la tige conductrice (17), à des bornes de sortie, caractérisé par le fait que la tige conductrice (17) se prolonge à son extrémité supérieure par une boucle souple (19) en fil conducteur, située dans un plan sensiblement perpendiculaire à l'axe du flotteur (4) et dont l'extrémité (20) opposée à la tige conductrice (17) est fixée sur ladite pièce conductrice (8).

2. Détecteur selon la revendication 1, caractérisé par le fait que la tige conductrice (17) est faite du même fil que la boucle (19).

3. Détecteur selon les revendications 1 ou 2, caractérisé par le fait que la pièce conductrice (8) est en forme générale de couronne placée sur le dessus du flotteur, qui se prolonge par trois languettes radiales (10, 11, 12) fixées au flotteur par des rivets (13) et que les lames conductrices (7) sont les prolongements de cette pièce conductrice.

## Patentansprüche

1. Niveauerkennungsgerät für eine Flüssigkeit, mit einer feststehenden Stange (3), die auf ihrer gesamten Länge eine Wicklung (6) trägt, einem ringförmigen um die Stange (3) montierten Schwimmer (4), der wenigstens eine mit der Wicklung (6) in dauerndem Kontakt stehende leitende mit einem leitenden auf dem Schwimmer (4) befestigten Teil (8) verbundene Lamelle (7) trägt, mit Alarmmitteln, die eine in einer Bohrung (18) des Schwimmers (4) gleitende leitende Stange (17) und eine leitende, am unteren Ende der festehenden Stange (3) befestigte Fläche (21) enthalten, wobei die Bohrung (18) im wesentlichen parallel zur Achse der feststehenden Stange (3) verläuft und die leitende Stange (17) ein Rückhaltemittel aufweist und die Einrichtung derart ausgebildet ist, daß die leitende Stange (17) den Schwimmer (4) nach unten überragt, wenn das Niveau oberhalb eines festgelegten Alarmniveaus ist und in Kontakt mit der leitenden Fläche (21) tritt, wenn das Alarmniveau erreicht ist und mit elektrischen Verbindungen (22), die die Wicklung (6), die leitende Fläche (21), eine oder mehrere leitende Lamellen (7) und die leitende Stange (17) mit Ausgangsklemmen verbinden, dadurch gekennzeichnet, daß die leitende Stange (17) sich an ihrem oberen Ende als leitender Draht in eine biegsame Schleife (19) verlängert, welche in einer im wesentlichen rechtwinklig zur Achse des Schwimmers (4) verlaufenden Ebene angeordnet ist und dessen der leitenden Stange (17) entgegengesetztes Ende (20) an dem leitenden Teil (8) befestigt ist.

2. Erkennungsgerät nach Anspruch 1, dadurch gekennzeichnet, daß die leitende Stange (17) von dem gleichen Draht wie die Schleife (19) gebildet ist.

3. Erkennungsgerät nach Anspruch 1 oder 2, dadurch gekennzeichnet, daß das leitende Teil (8) im allgemeinen als Kranz auf dem Schwimmer angeordnet ist, der sich in drei radialen Zungen (10, 11, 12) verlängert, die mit Nieten (13) auf dem Schwimmer befestigt sind und daß die leitenden Lamellen (7) Verlängerungen dieses leitende Teiles sind.

## Claims

1. Liquid level detector of the type comprising a fixed rod (3) bearing a winding (6) over the whole of its height, an annular float (4) mounted around the rod (3) and bearing at least one conducting blade (7) constantly in contact with said winding (6), and connected to a conducting piece itself fixed on the float, warning means comprising a conducting rod (17) sliding in a bore (18) made in the float (4), said bore (18) having its axis substantially parallel to the axis of the fixed rod (3), the conducting rod (17) comprising a retaining means, and a conducting surface (21) fixed to the lower end of the fixed rod (3), the arrangement being such that the conducting rod (17), projects downwardly from the float (4) when the level is higher than a determined warning level and comes into contact with the conducting surface (21) when this level is reached, and electrical connections (22) connecting the winding (6), the conducting surface (21), the or each conducting blade (7) and the conducting rod (17) to output terminals, characterized by the fact that the conducting rod (17) extends at its top end in a supple loop made (19) of conducting wire located in a plane substantially perpendicular to the axis of the float (4) and of which the end (20) opposite the conducting rod (17) is fixed on said conducting piece (8).

2. Detector according to Claim 1, characterized in that the conducting rod (17) is made of the same wire as the loop (19).

3. Detector according to Claims 1 or 2, characterized in that the conducting piece (8) is in a form generally of a ring placed on the top of the float, which extend in three radial tongues (10, 11, 12) fixed to the float by rivets (13) and the conducting blades (7) are the extensions of said conducting piece.

FIG_2

FIG_1

FIG.3